# EUROPÄISCHE PATENTSCHRIFT

(11) **EP 0 867 418 B1**
(45) Veröffentlichungstag und Bekanntmachung des Hinweises auf die Patenterteilung: **25.07.2001**
(21) Anmeldenummer: 98104879.6
(22) Anmeldetag: 18.03.1998
(51) Int. Cl.: C03C 17/04, H01J 17/49

(54) **Verfahren und Vorrichtung zur Erzeugung von grossflächigen Präzisionsstrukturen auf Flachglas**
Process and apparatus for producing large surface precision structures on sheet glass
Procédé et dispositif pour la fabrication de structures de précision à grandes surfaces sur des feuilles de verre

(30) Priorität: 29.03.1997 DE 19713311
(43) Veröffentlichungstag der Anmeldung: 30.09.1998
(73) Patentinhaber: Schott Glas, 55122 Mainz (DE); CARL-ZEISS-STIFTUNG trading as Schott Glas, 55122 Mainz (DE)
(72) Erfinder: Ostendarp, Heinrich, Dr., 55128 Mainz (DE)
(74) Vertreter: Fuchs Mehler Weiss & Fritzsche

(56) Entgegenhaltungen:
- EP-A- 0 802 170
- FR-A- 904 468
- FR-A- 2 738 393
- GB-A- 2 066 159
- PATENT ABSTRACTS OF JAPAN vol. 97, no. 5, 30.Mai 1997 & JP 09 012336 A (ASAHI GLASS CO LTD), 14.Januar 1997,
- PATENT ABSTRACTS OF JAPAN vol. 97, no. 2, 28.Februar 1997 & JP 08 273537 A (DAINIPPON PRINTING CO LTD), 18.Oktober 1996,
- PATENT ABSTRACTS OF JAPAN vol. 16, no. 54, 12.Februar 1992 & JP 03 254857 A (DAINIPPON PRINTING CO LTD), 13.November 1991,

## Beschreibung

Die Erfindung betrifft ein Verfahren zur Erzeugung von großflächigen Präzisionsstrukturen auf Flachglas.

Die Erfindung bezieht sich auch auf eine Vorrichtung zur Durchführung eines derartigen Verfahrens.

Mit großflächigen Präzisionsstrukturen versehenes Flachglas wird für Präzisionsanwendungen, insbesondere im Bereich der Gläser mit optischen Funktionen, benötigt. Derartige Gläser sind beispielsweise Displayscheiben von neueren Flachbildschirmgenerationen (Plasma Display Panels (PDP), Plasma Addressed Liquid Crystal (PALC)). In diese Flachbildschirmgläser werden Mikrokanalstrukturen für die Ansteuerung einzelner Zeilen oder Spalten eingebracht, die sich über die gesamte aktive Bildschirmbreite oder -höhe erstrecken und in denen über elektrische Entladungen Plasma gezündet wird. Die beidseitige Begrenzung eines einzelnen Kanals wird über rechteckige Stege realisiert, deren Breite möglichst gering (<100 *µ*m) ist. Um ein ausreichendes Entladungsvolumen zu erhalten, ist die Höhe der Stege wesentlich größer als deren Breite sein. Der Abstand der Stege sollte möglichst gering sein. Derzeit werden in Kleinserien typische Werte zwischen 360*µ*m und 640*µ*m erreicht. Dabei beträgt die Höhe der Stege etwa 150 *µ*m bis 250 *µ*m bei 50 *µ*m bis 100 *µ*m Breite. Durch jeden einzelnen, durch die Stege begrenzten Kanal, verlaufen verfahrensabhängig beim PDP eine, beim PALC zwei Elektroden zum Zünden des Plasma.

Bei der Strukturierung dieser Flachbildschirmgläser, die am Beispiel eines 25"-PALC-Schirmes die Größe von 360mm x 650mm aufweisen, kommt es wegen der späteren Positionierung der Elektroden entscheidend auf die genaue laterale Dimensionierung und relative Positionier- und Reproduziergenauigkeit der Kanäle und damit auf die Formstabilität des Formgebungswerkzeuges an. Wenn man beispielsweise von einer Heißformgebung mittels eines konventionellen Chrom-Nickel-Stahlwerkzeuges ausgeht, so liegt der Ausdehnungskoeffizient bei ca. 12 x 10⁻⁶/K. Bei beispielsweise 360 mm Werkzeuglänge, wie für einen 25" PALC-Bildschirm erforderlich, ergibt dies immerhin pro K Temperaturschwankung eine Längenänderung von ca. 4*µ*m. Wenn man davon ausgeht, daß die erforderliche Positioniergenauigkeit der Elektroden in den Mikrokanälen im Bereich von ± 10*µ*m liegt, können also ± 2,5 K Temperaturschwankung im Strukturwerkzeug erhebliche Probleme bereiten.

Bei größeren Bildschirmen, wie beispielsweise 42" Bildschirmen, sind die zulässigen Temperaturschwankungen entsprechend geringer.

Bei anderen Anwendungen von Flachgläsern mit großflächigen Präzisionsstrukturen sind die Probleme ähnlich gelagert.

Zur Erzeugung von Strukturen in Flachglas ist es bekannt, Heißformgebungsverfahren mit entsprechend strukturierten Formgebungswerkzeugen zu verwenden.

Vorstehende Anforderungen schränken jedoch die Möglichkeit der Anwendung konventioneller Heißformgebungsverfahren, wie Walzen oder Pressen zur Erzeugung von großflächigen Präzisionsstrukturen ein.

Bei der konventionellen Heißformgebung sind zunächst folgende Nachteile gegeben:
- Findet eine Kontaktierung des Glases mit einem Preß- oder Walzwerkzeug als Formgebungswerkzeug nur kurzzeitig statt, d.h. vor der Erstarrung wird das Werkzeug vom Glas entfernt, so entstehen aufgrund des Zerfließens der Glasstruktur nach der Kontaktierung starke Verrundungen.
- Bei einer langzeitigen Kontaktierung, die beim Verfahren des Kaltpressens angewendet wird, treten durch starke Temperaturunterschiede und unterschiedliche thermische Dehnungen von Werkzeug und Glas nicht tolerierbare Spannungen auf.

Bei beiden Verfahren sind mit zunehmenden Werkzeugtemperaturen Verklebungen des Werkzeugs mit Glas schwer zu unterbinden.

Eine weitere wesentliche Anforderung bei der Herstellung der gattungsgemäßen Gläser ist die Einhaltung eines stabilen Produktionsprozesses, bei dem die örtliche Verteilung und die Form der Strukturen extrem konstant eingehalten werden muß. Hieraus ergeben sich folgende zusätzliche Einschränkungen konventioneller Heißformgebung:
- Da bei konventioneller Heißformgebung das Formgebungswerkzeug vollständig aufgeheizt wird, um eine genügende Oberflächentemperatur an der Berührungsfläche zum Glas zu erreichen, treten hohe, in geforderten Genauigkeitsbereichen von ± 2 K (bei typischen Werkzeugstählen und Flachglasgrößen notwendige Einschränkung) nicht reproduzierbare Temperaturen auf, die zu einer nicht tolerierbaren Deformation des Werkzeuges führen.
- Bei der Herstellung von strukturiertem Glas mit geringen Strukturradien tritt ein hoher Werkzeugverschleiß auf, der einen ständigen Austausch des Formgebungswerkzeugs erfordert.

Wegen dieser Einschränkungen und Nachteile bei der Erzeugung von Strukturen durch Heißformgebungsverfahren werden diese bisher nicht für die Erzeugung großflächiger Präzisionsstrukturen angewendet. Stattdessen werden derartige Strukturen heute gemäß dem Stand der Technik mittels Siebdruckverfahren auf das Flachglas aufgebracht, indem die die Strukturen bildenden Begrenzungen, bei den erwähnten Flachbildschirmen die Stege, mittels eines Glaslotes schichtweise auf das Flachglas aufgedruckt werden. Die Formgebung geschieht über entsprechende, auf das Glaslot aufgetragene Masken, die Ausbrüche für die auszubildenden Strukturen, die Stege im Beispiel, aufweisen. Für jede aufgedruckte Schicht muß dabei die Maske angepaßt werden. Für die erwähnten Stege bei Flachbildschirmgläsern, die etwa 200 *µ*m hoch und im Mittel etwa 70 *µ*m breit sind, sind etwa 10-15 Schichtungen notwendig, abgesehen von den in 2 bis 3 Schichtungen aufzudruckenden, etwa 30 *µ*m dicken Elektroden zwischen den Stegen.

Dieses Siebdruckverfahren bedingt einen erheblichen verfahrenstechnischen Aufwand, nicht zuletzt auch deswegen, weil nach dem Auflegen der Maske auf das Glaslot und dem Ausfüllen der Maskendurchbrüche mit dem Glaslot ein Aushärten stattfinden muß. Zur Kontaktierung eines Glaslotes auf einem entsprechenden Glasgrundsubstrat muß das Lot zusätzlich hinsichtlich seiner physikalischen und chemischen Eigenschaften dem Glasgrundsubstrat (z.B. thermischer Ausdehnungskoeffizient) und der jeweiligen Applikation (z.B. Resistenz gegen Plasmazündung) angepaßt werden. Nach dem Auftrag benötigen derartige Glaslote zur Aushärtung eine gewisse Prozeßzeit von typischerweise 5 bis 10 Minuten bei 450°C, was bei 15 Schichtungen eine sehr hohe Verfahrensdauer bedingt, so daß das bekannte Siebdruckverfahren auf Prototypproduktionen begrenzt und für eine spätere Serienfertigung unwirtschaftlich ist.

Der Erfindung liegt die Aufgabe zugrunde, das eingangs bezeichnete Verfahren so zu führen bzw. die zugehörige Vorrichtung so auszubilden, daß auf wirtschaftliche, für eine Serienproduktion geeignete Weise eine Ausbildung der großflächigen Präzisionsstrukturen durch Auftragen und anschließendem Aushärten eines geeigneten Materials, im folgenden Paste genannt, auf das Flachglas möglich ist.

Die Lösung dieser Aufgabe gelingt erfindungsgemäß bei dem Verfahren gemäß den Schritten:
- Einbringen eines die Strukturen ausbildenden pastenförmigen Materials in eine strukturgebende Oberfläche eines Werkzeuges,
- Auftragen des pastenförmigen Materials durch einmaliges Anpressen des Werkzeuges an das Flachglas und Aushärten des aufgetragenen Materials,
- Verschmelzen des aufgetragenen Materials mit dem Flachglas durch eine lokale äußere Erwärmung der strukturgebenden Oberfläche des Werkzeuges bis zu einer von der Höhe der Struktur vorgegebenen Oberflächentiefe auf die notwendige Prozeßtemperatur.

Hinsichtlich der Vorrichtung gelingt die Lösung der Augabe gemäß der Erfindung durch eine Vorrichtung mit
- einer Einrichtung zum Einbringen eines die Strukturen ausbildenden pastenförmigen Materials in eine strukturgebende Oberfläche eines Formgebungswerkzeuges,
- Mitteln zum Auftragen des pastenförmigen Materials durch einmaliges Anpressen des Formgebungswerkzeuges an das Flachglas sowie Mitteln zum Aushärten des aufgetragenen Materials,
- Mitteln zum Verschmelzen des aufgetragenen Materials auf dem Flachglas durch eine lokale Erwärmung der strukturgebenden Oberfläche des Formgebungswerkzeuges mit der eingebrachten Paste auf die notwendige Prozeßtemperatur durch eine äußere Wärme erzeugende Quelle.

Durch die erfindungsgemäßen Maßnahmen ist mit großem Vorteil auf wirtschaftliche Weise eine präzise Ausbildung von großflächigen Strukturen durch Auftragen und Aushärten eines verträglichen pastenförmigen Materials auf dem Flachglas möglich.

In der älteren europäischen Anmeldung unter der Veröffentlichungsnummer EP 0 802 170 A3 ist ein Verfahren mit einer entsprechenden Vorrichtung zur Erzeugung von großflächigen Präzisionsstrukturen auf Flachglas beschrieben, bei dem ein die Strukturen ausbildendes pastenförmiges Material in eine strukturgebende Oberfläche eines Werkzeuges kalt eingebracht und dann auf das Flachglas aushärtend "aufgedrückt" wird.

Das erfinderische Prinzip bezieht sich jedoch auf eine Heißformgebung, wogegen die vorgenannte EP-Anmeldung praktisch ein "kaltes" Druckverfahren beschreibt. Es versteht sich, daß bei dem erfindungsgemäßen "heißen" Aufschmelzen des aufgebrachten Musters auf das Flachglas die Verbindung mit dem Flachglas wesentlich inniger und damit stabiler ist als bei einem einfachen "Aufbacken", d.h. Aushärten und Sintern des Musters im Fall der EP-Anmeldung, wobei dort offensichtlich noch eine Klebeschicht benötigt wird. Zwar ist in der EP-Anmeldung auch von einer Strahlungserwärmung die Rede, jedoch geht es dabei nur um das Fließfähigmachen des aufzutragenden Materials, nicht aber um eine Erwärmung des Formgebungswerkzeuges, um ein Verschmelzen der aufgetragenen Paste mit dem Flachglas zu bewirken.

Vorzugsweise wird gemäß einem weiterbildenden Merkmal der Erfindung zum lokalen äusseren Erwärmen der strukturgebenden Oberfläche des strukturierten Formgebungswerkzeuges eine Laserstrahlung verwendet. Eine derartige Anordnung ermöglicht mit Vorteil eine sehr gezielte gleichförmige Aufwärmung der strukturgebenden Oberfläche des Werkzeuges, was alternativ auch durch eine induktive oder elektrische Widerstandsheizung erzielbar ist.

Die Erwärmung kann zusätzlich durch andere geeignete konventionelle Wärmequellen, beispielsweise Flammleisten, unterstützt werden, um zu vermeiden, daß für Glas transmissive teure Hochleistungsgläser mit sehr hohen Leistungen eingesetzt werden müssen.

Um zu vermeiden, daß durch die Erwärmung der strukturgebenden Oberfläche mittels der äusseren Wärmequelle das Formgebungswerkzeug selbst zu sehr erwärmt wird, wird das Formgebungswerkzeug intern gekühlt.

Für die Ausbildung der Strukturen durch das Formgebungswerkzeug ergeben sich mehrere Möglichkeiten. So kann nach einer Ausgestaltung der Erfindung das Formgebungswerkzeug mit dem eingebrachten pastenförmigen Material kontinuierlich auf der zu strukturierenden Glasoberfläche abgerollt werden.

Um einen ständigen, teuren Austausch des kompletten Formgebungswerkzeuges infolge des Werkzeugverschleißes zu vermeiden, werden die Strukturen vorzugweise mit einem zweigeteilten Formgebungswerkzeug ausgeführt, das aus einem Basiswerkzeug und einem daran lösbar angebrachten formgebenden Medium mit der strukturgebenden Oberfläche für das einzubringende pastenförmige Material gebildet ist. Im Verschleißfall muß daher nur dieses formgebende Medium ersetzt werden, was relativ einfach und mit geringen Kosten möglich ist.

Ferner erlaubt diese Zweiteilung Freiheitsgrade in der Werkstoffwahl. Wenn beipielsweise gemäß einer Weiterbildung der Erfindung das Basiswerkzeug aus einem Material mit geringer Wärmeleitfähigkeit und das formgebende Medium aus einem Material mit hoher Wärmeleitfähigkeit besteht, ist eine ausgeprägte lokale Erwärmung auf die vorgegebene Oberflächentiefe möglich.

Besondere Vorteile werden auch gemäß einer Weiterbildung der Erfindung erzielt, wenn bei einem derartigen zweiteiligen Formgebungswerkzeug das in den Aussparungen bzw. Vertiefungen mit der Paste angefüllte formgebende Medium während des Abrollens des Formgebungswerkzeuges vom Basiswerkzeug abgewickelt, auf das Glas gedrückt wird, so daß die Paste mit dem Glas kontaktiert wird und dort während der Aushärtung der aufgetragenen Paste belassen wird. Wegen der geringen Wärmekapazität des formgebenden Mediums tritt eine wesentlich schnellere Abkühlung der aufgetragenen Strukturen ein, was ein präzises und schnelles Ausformen dieser Strukturen mit Vorteil nach sich zieht.

Das pastenförmige Material kann ein Glaslot, d.h. ein Material sein, das bereits im Ausgangszustand eine Paste ist. Diese Paste wird dann gemäß Weitergestaltungen der Erfindung in die strukturgebende Oberfläche des Werkzeuges analog zum Tiefdruck eingewalzt oder gerakelt, anschließend beim Berühren des Werkzeuges mit dem Glas mit diesem verbunden und ausgehärtet.

Es ist auch denkbar, festes Glasmaterial, insbesondere sogenanntes Micro-Sheet-Dünnglas, lokal vor der Einbringung in die strukturgebende Oberfläche des Werkzeugs zu erhitzen und zu verflüssigen, um dann dieses zähflüssige Glas analog zum Tiefdruckverfahren in die Vertiefungen der strukturgebenden Oberfläche des Werkzeuges durch Walzen oder Rakeln zu drücken, um es dann anschließend auf das gegebenenfalls erwärmte Flachglas aufzutragen, mit ihm zu verschmelzen und abkühlen zu lassen.

Zum Auftragen von Elektrodenstrukturen, beispielsweise im Fall der eingangs erwähnten Flachbildschirme, kann das pastenförmige Material eine elektrisch leitfähige Paste sein, die in die strukturgebende Oberfläche des Werkzeuges eingewalzt oder eingerakelt wird und nach dem Kontaktieren mit der Oberfläche des Flachglases aushärtet.

Weitere Ausgestaltungen sowie Weiterbildungen der Erfindung ergeben sich anhand von in den Zeichnungen dargestellten Ausführungsbeispielen.

Es zeigen:
- Figur 1: in einer Prinzipdarstellung eine Vorrichtung gemäß der Erfindung zum Aufheizen der strukturgebenden Oberfläche eines Formgebungswerkzeuges mittels Laser bei Durchdringung eines für Laserstrahlung transmissiven Mediums (Glas),
- Figur 2: in einer vergrößerten Darstellung ein zweiteiliges Formgebungswerkzeug mit einem Basiswerkzeug und einem formgebenden Medium,
- Figur 3: ein zweiteiliges Formgebungswerkzeug gemäß Figur 2 mit einer Walze als Basiswerkzeug und einem um diese Walze gewickelten strukturierten Blech als formgebendes Medium, und mit einem Rakelmesser zum Einbringen der zu strukturierenden Paste in das formgebende Medium,
- Figur 4: ein zweiteiliges Walz-Formgebungswerkzeug nach Figur 3, jedoch mit einer zweiten ebenen Walze zum Einbringen der Paste in das formgebende Medium,
- Figur 5: ein zweiteiliges Walz-Formgebungswerkzeug nach Figur 3, mit einem Rakelmesser zur Einbringung eines aufgeschmolzenen Flachglases, hier in Form eines Micro-Sheets, als Paste in das formgebende Medium,
- Figur 6: ein zweiteiliges Walz-Formgebungswerkzeug nach Figur 3, jedoch mit einer ebenen Walze zur Einbringung eines aufgeschmolzenen Flachglases, hier in Form eines Micro-Sheets, als Paste in das formgebende Medium,
- Figur 7: ein zweiteiliges Walz-Formgebungswerkzeug nach Figur 3, mit Einbringung einer Paste in das formgebende Medium durch eine Bugwelle der Paste vor dem Walzwerkzeug,
- Figur 8: ein zweiteiliges Walz-Formgebungswerkzeug nach Figur 3 mit Einbringung eines aufgeschmolzenen Flachglases, hier in Form eines Micro-Sheets, in das formgebende Medium durch eine Bugwelle vor dem Walzwerkzeug,
- Figur 9: ein zweiteiliges Formgebungswerkzeug entsprechend Figur 3, bei der jedoch das formgebende Medium in Gestalt des strukturierten Bleches mit der in seinen Strukturen befindlichen Paste während des Abrollens der Basiswalze von dieser abgewickelt, auf das Glas gedrückt wird und während der Aushärtephase auf dem Glas verbleibt,
- Figur 10: ein zweiteiliges Formgebungswerkzeug mit einer Basiswalze, die anstelle eines Bleches mehrfach mit einem Bandmaterial als formgebendes Medium schraubenförmig umwickelt ist,
- Figur 11: ein Formgebungswerkzeug, bestehend aus zwei, mehrfach mit einem Bandmaterial als formgebendes Medium umwickelten achsparallelen Walzen, von denen eine die Basiswalze ist,
- Figur 11A: eine Erweiterung der Ausführung nach Figur 11 um eine Spannwalze zwecks Spannen des Bandmaterials, bei thermischer Dehnung des Bandmaterials.
- Figur 12: eine Ausführung nach Figur 11 bzw. 11A mit einer Laserstrahlaufheizung, bestehend aus einem unterhalb des Flachglases angeordneten Laserdiodenarray und
- Figur 13: eine Ausführung nach Figur 11 bzw. 11A, mit einer Laserstrahlaufheizung, bestehend aus einem oberhalb des Flachglases seitlich an der Basiswalze angeordneten Laserdiodenarray.

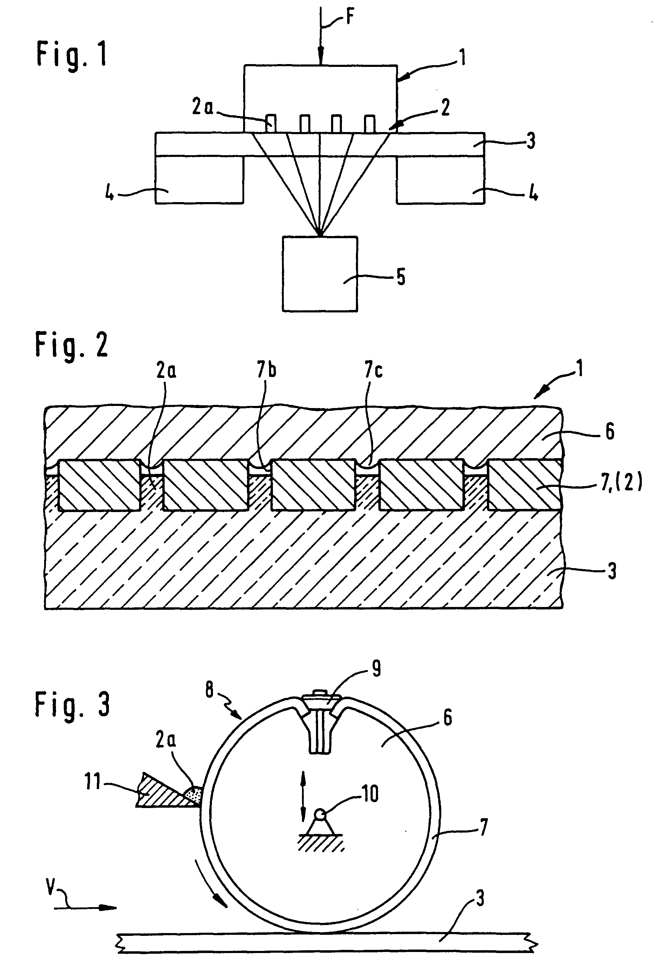

Die Figur 1 zeigt eine Vorrichtung für ein Verfahren zur Formgebung von großflächigen Präzisionsstrukturen - hier in Form von Kanälen, die durch Stege getrennt sind - in einem Flasglas 3, im vorliegenden Ausführungsbeispiel ein Flachglas für einen Flachbildschirm mit Mikrokanalstrukturen. Die Vorrichtung sieht ein Formgebungswerkzeug 1 mit einer strukturgebenden Oberfläche 2, in die ein die Strukturen ausbildendes pastenförmiges Material 2a eingebracht und, das mittels einer Kraft F an die Oberseite des erwärmten Flachglases 3 gedrückt wird, vor, um dort die gewünschten Präzisionsstrukturen druckartig aufzutragen. Die Vorrichtung weist ferner Gegenkraftaufnahmen 4 auf, um die Kraft F in bezug auf die Glasplatte 3 zu kompensieren.

Das die Strukturen durch Auftragen ausbildende pastenförmige, d.h. zähflüssige Material 2a kann bei Glasstrukturen durch ein bereits bei dem bekannten Siebdruckverfahren eingesetztes, angepaßtes Glaslot, aber auch durch verflüssigtes Glas oder durch leitfähiges Elektrodenmaterial im Fall des Auftragens von Elektrodenstrukturen gebildet sein. Alle diese Materialien 2a werden im folgenden als "Pasten" im Sinne der Erfindung bezeichnet.

Glaslot hat prinzipiell eine zähflüssige Konsistenz, die nach Bedarf eingestellt werden kann. Es wird mittels der Drucktechnik entlehnter Verfahren in die Strukturen der strukturgebenden Oberfläche 2 des Werkzeuges 1 eingebracht und danach auf das Flachglas 3 aufgedruckt, vorzugsweise, wie noch zu erläutern sein wird, zunächst in die Werkzeugstrukturen aufgeraktelt oder aufgewalzt, dann mit dem Glas verbunden und aufgrund der Temperatur des erwärmten Flachglases, die dann bei ca. 450°C liegt, verfestigt, d.h. durch Sintern ausgehärtet.

Anstelle mittels eines Glaslotes können die auf dem Glas aufzutragenden Strukturen auch durch zähflüssiges Glas, das durch eine Erhitzung über seine Transformationstemperatur erzeugt wird, ausgebildet werden. Auf entsprechende Vorrichtungen zur Strukturausbildung des Glases und zum Auftragen des Glases wird später eingegangen.

Optimal ist es, das aufzuschmelzende Material, die Paste 2a, in einer Stärke zur Verfügung zu stellen, die dem je Flächeneinheit benötigten Auftragvolumen auf das Flachglas 3 entspricht, so daß das aufschmelzende Material über entsprechende, später noch gezeigte Vorrichtungen kontinuierlich synchron mit der "Druckgeschwindigkeit" des als Walze ausgestalteten Formgebungswerkzeugs in die Strukturen des formgebenden Werkzeugs 1 verteilt wird. Unter Druckgeschwindigkeit versteht man die Oberflächengeschwindigkeit des Formgebungswerkzeugs 1.

Bei der Ausbildung der Präzisionsstrukturen auf einem Flachbildschirm, einem bevorzugten Anwendungsfall der Erfindung, liegt die für die Ausbildung der Stege zwischen den Kanälen benötigte Glasstärke etwa zwischen 20 *µ*m und 40 *µ*m. Für diesen Anwendungsfall, sowie für vergleichbare Fälle, werden daher Flachgläser, vorzugsweise Dünstgläser, sogenannte Micro-Sheets, verwendet, die mit spziellen Herstellungsprozessen (Down-Draw) erzeugbar sind.

Alternativ können derartige Micro-Sheets auch aus anderen aufschmelzbaren Materialien als Glas bestehen.

Ein aus Glas hergestelltes Micro-Sheet ist letztlich ein unstrukturiertes und wegen seiner geringen Stärke äußerst biegsames Glas, das als Rollenmaterial auf dem Markt zur Verfügung steht. Es muß vor dem Einbringen in das Werkzeug 1 über Tg aufgeheizt werden, damit es flüssig wird, um dann z.B. mittels eines Rakelmessers oder einer (nicht dargestellten) Hilfswalze in die strukturgebenden Vertiefungen der Oberfläche 2 des Werkzeuges 1 eingedrückt zu werden.

Für das Auftragen, Temperieren und Kontaktieren, d.h. Verschmelzen und Aushärten der Paste 2a ist es notwendig, daß die Oberfläche des Werkzeugs 1 eine entsprechende Prozeßtemperatur hat.

Eine vollständige Aufheizung des Werkzeuges 1 wird mit Vorteil dadurch umgangen, daß die Einbringung der Wärmeenergie lokal stark beschränkt und leistungsmäßig sehr dosiert stattfindet, indem lediglich die strukturgebende Oberfläche 2 des Werkzeuges 1 bis zu einer von der Höhe der Strukturen vorgebenen Oberflächentiefe auf die notwendige Prozeßtemperatur von aussen erwärmt wird.

Im vorliegenden Ausführungsbeispiel wird dabei gemäß einer Ausgestaltung der Erfindung zum lokalen Aufheizen der strukturgebenden Oberfläche 2 auf die Prozeßtemperatur vor Aufsetzen des Werkzeugs 1 bzw. bei aufgesetztem Werkzeug 1, d.h. nach Kontaktierung der Paste 2a mit dem Flachglas 3, mittels eines Lasers 5 eine Laserstrahlung durch das Flachglas 3 auf die strukturgebende Oberfläche 2 des Formgebungswerkzeuges 1 gerichtet. Alternativ kann auch eine induktive oder elektrische Widerstandsheizung vorgesehen sein.

Dadurch kann das sich in den Strukturräumen der formgebenden Oberfläche 2 befindliche Pastenmaterial von aussen auf die notwendige Prozeßtemperatur aufgeheizt werden.

Der Laser 5 ist so ausgewählt, daß er einen Laserstrahl erzeugt, der für Glas eine möglichst hohe Transmission aufweist d.h. keine nennenswerte Aufheizung des Flachglases stattfindet, und die strukturgebende Oberfläche 2 auf die notwendige Prozeßtemperatur zur Aushärtung der Paste aufheizt. Dabei kann das Glas bei der Kontaktierung mit der Paste 2a mittels einer geeigneten anderen Energiequelle bereits auf eine Temperatur vorgeheizt sein, bei der das Glas noch eine gewisse mechanische Eigenstabilität aufweist (unterhalb der Transformationstemperatur) und durch die Temperatur des lasererhitzten Formgebungswerkzeuges die zum Sintern des aufgetragenen Glaslotes bzw. zum Flüssighalten des aufgeschmolzenen Micro-Sheets benötigte Energie eingebracht wird.

Vor der Kontaktierung der Paste 2a mit der Oberfläche des Flachglases 3, d.h. bei abgehobenem Werkzeug 1, kann die mit der Paste ausgefüllte strukturgebende Oberfläche 2 des Werkzeuges durch einen weiteren Laser vorgewärmt werden, damit z.B. das Micro-sheet auf die entsprechende Temperatur zu seiner Verflüssigung aufgeheizt wird. Die Strahlung dieses zusätzlichen Lasers braucht für Glas nicht durchlässig sein, d.h. kann im UV- oder fernen IR-Bereich liegen, da sich in dieser Stellung des Werkzeuges 1 das Flachglas 3 nicht im Strahlengang des zusätzlichen Lasers befindet.

Hochleistungslaser für diesen Wellenlängenbereich sind marktgängiger und kostengünstiger als Laser mit einer für Glas transmissiven Wellenlänge.

Gegebenenfalls kann die Aufheizung der strukturgebenden Oberfläche 2 des Formgebungswerkzeuges 1 mittels des Lasers 5 oder durch eine induktive bzw. elektrische Widerstandsheizung auch um andere, geeignete konventionelle Wärmequellen (Flammleisten o.ä.) ergänzt werden. Ein Vorteil des Einsatzes des Lasers 5 gegenüber konventionellen Energiequellen besteht jedoch in der Möglichkeit einer exakteren örtlichen und leistungsmäßigen Dosierung. Als Laserquellen eignen sich beispielsweise Nd-YAG-Laser (Wellenlänge 1064 nm) und Hochleistungsdiodenlaser (Wellenlänge etwa 800 nm), da diese für Glas eine hohe Transmission aufweisen. Zur gezielten Einbringung der Laserstrahlung ist es notwendig, wie in Figur 1 skizzenhaft angedeutet, konstruktive Maßnahmen zur Führung des Strahles auf das Werkzeug 1 bzw. dessen strukturgebende Oberfläche 2 vorzusehen, was im Können des Fachmannes liegt. Die zusätzliche Aufheizung des Werkzeuges 1 durch konventionelle Wärmequellen, wie oben beschrieben, ist insbesondere in der Anlaufphase von Vorteil.

Eine weitere Verwendung eines Lasers 5, der für Glas transmissiv ist, besteht darin, metallische Elektroden oder leitfähige Pasten, die mit dem Flachglas 3 kontaktiert werden sollen, auf der einen Seite des Flachglases mittels des Werkzeuges 1 zu positionieren, um sie von der anderen Seite mittels des für Glas transmissiven Lasers 5 aufzuheizen und so mit dem Flachglas 3 zu verlöten.

Um zu vermeiden, daß sich das Werkzeug 1 aufgrund der Erwärmung der strukturgebenden Oberfläche 2 zu sehr erwärmt, wird es mit bekannten Mitteln intern gekühlt.

Das Aufheizen des Werkzeuges 1 bzw. dessen strukturgebende Oberfläche 2 erfolgt auf Temperaturen, die unterhalb der Temperatur TK liegen, bei der das Glas am Werkzeug kleben würde. Diese letztere Temperatur ist abhängig vom Material der strukturgebenden Oberfläche des Werkzeuges und gegebenenfalls einer Anti-Haft-Beschichtung sowie auch von der Glassorte. Beispiele für Materialien, an denen Glas schlecht haftet, sind z.B. Chrom-Nickel-Stähle, die bis ca. 850 K einsetzbar sind, weil sie erst bei höheren Temperaturen zum Verkleben neigen. Noch schlechter haften Platin-Gold-Legierungen, ein Material, das allerdings sehr teuer ist, so daß man bemüht ist, einfachere Materialien oder dieses Material nur in dünnen Schichten zu verwenden. Auf jeden Fall kann dieses Material nach dessen Abnutzung neu eingeschmolzen werden.

Der mit dem eingangs erwähnten hohen Werkzeugverschleiß (Verrundung der Ecken) Kosten- und Umrüstaufwand kann mit Vorteil dadurch umgangen werden, daß, wie im Besonderen aus Figur 2 deutlich wird, die dem Verschleiß unterliegende strukturgebende Oberfläche 2 des Werkzeuges 1 durch ein formgebendes Medium 7 mit Oberflächenstrukturen und Ausbrüchen für die Paste 2a in Anlehnung an die beim Papier-Tiefdruck eingesetzten, Druckbild erzeugenden Folien ausgebildet wird, die lösbar an einem Basiswerkzeug 6 befestigt wird. Dieses formgebende Medium 7 kann, wie noch dargestellt werden wird, durch verschiedenartige Strukturen gebildet werden. Im Prinzipbild nach Figur 2 ist ein dünnes strukturiertes Blech 7 vorgesehen, das den anzuformenden Stegen konforme Durchbrüche 7b für die Paste 2a aufweist. In die Oberfläche des Basiswerkzeuges 6 sind dabei, wie in Figur 2 skizziert, entsprechende Strukturen 7c zur Positionierung des Bleches 7 eingebracht. Diese Strukturen sind im Falle der Anwendung bei Flachbildschirmgläsern zudem wesentlich einfacher zu erzeugen, als ein strukturiertes Einkomponenten-Werkzeug zur direkten Formgebung. Das dünne Blech 7, das die strukturgebende Oberfläche 2 bildet, kann dicker oder gleich der Dicke (Höhe) der erzeugten Strukturen sein; vorzugsweise ist es jedoch dicker, damit auch die Struktur höher werden kann. Wenn man zunächst eine Struktur auf dem Glas erzeugt, die höher ist als die gewünschte, kann nachträglich auf einfache Weise auf ein sehr gleichmäßig hohes Glas geschliffen werden.

Anstelle der Durchbrüche 7b im Blechteil 7 können auch Einbuchtungen, in der Papier-Drucktechnik Näpfchen genannt, vorgesehen sein.

Durch die Trennung des formgebenden Mediums, des Bleches 7, vom Basiswerkzeug 6, das durch eine Walze oder einen Stempel gebildet werden kann, kann mit Vorteil für das Basiswerkzeug 6 ein Material mit geringer thermischer Dehnung und hoher Reibfestigkeit, beispielsweise ein spezielles Keramikmaterial, verwendet werden. Bei der Auswahl des formgebenden Mediums 7 kann anderen Faktoren, wie beispielsweise einer minimalen Verklebeneigung mit dem Glas, hoher Verschleißfestigkeit und hoher Temperaturbeständigkeit, wie sie z.B. durch die erwähnten Chrom-Nickel-Stähle oder Platin-Gold-Legierungen erzielt werden, Rechnung getragen werden.

So ist es denkbar, als Werkstoff für das Basiswerkzeug 6 Quarzal zu verwenden, das einen sehr geringen Ausdehnungskoeffizienten von 0.56 x 10⁻⁶/K besitzt. Im Vergleich zur Verwendung von Stahl als Basiswerkzeug sind dann bei gleichen zulässigen Längenschwankungen etwa 20-fache Temperaturschwankungen zulässig.

Der Werkstoff Quarzal besitzt auch eine geringe Wärmeleitfähigkeit. Nimmt man zugleich für das formgebende Medium einen gut wärmeleitenden Werkstoff, z.B. ein strukturiertes Blechteil gemäß Figur 2, dann ist gemäß einem weiteren Vorteil des Zwei-Komponentenwerkzeuges eine ausgeprägte lokale isolierte Erwärmung auf die vorgegebenen Oberflächentiefe möglich.

Da Quarzal auch gleichzeitig eine schlechte elektrische Leitfähigkeit besitzt, ist bei Verwendung von Quarzal als Werkstoff für das Basiswerkzeug 6 alternativ zum Laser 5 gemäß Figur 1 eine induktive oder elektrische Widerstandsheizung zur Aufheizung des formgebenden Mediums 7 möglich.

Ein weiterer Vorteil der Trennung zwischen Basiswerkzeug 6 und formgebendem Medium 7 besteht noch darin, daß nach der Formgebung der Paste 2a und Kontaktierung mit dem Glas 3 das formgebende Medium 7 und die Paste auf dem Glas belassen werden kann, bis dieses ausgehärtet ist. Im Vergleich zur Belassung eines vollständigen konventionellen Werkzeuges auf der Glasstruktur kann wegen der geringen Wärmekapazität des formgebenden Mediums eine wesentlich schnellere Temperaturänderung herbeigeführt werden.

Insbesondere bei einem segmentierten, mit Durchbrüchen versehenen formgebendem Medium, wie im Fall des Bleches 7 nach Figur 2, werden zudem während der Abkühlung Spannungen zwischen Glas 3 und dem formgebenden Werkzeug 1 minimiert, da thermische Dehnungen durch die Durchbrüche aufgenommen werden. Das Auslösen des formgebenden Mediums kann durch eine Konizität der erhabenen Teile der strukturgebenden Oberfläche 2 gefördert werden.

Das dem Verschleiß unterliegende Blech 7 kann, ohne das Basiswerkzeug zu wechseln, ausgetauscht werden. Hierzu sind verschiedene, später noch beschriebene Schnellspannvorrichtungen einsetzbar.

Für die Ausbildung des formgebenden Werkzeuges, bestehend aus dem Basiswerkzeug 6 und dem separaten formgebenden Medium 7, für das Einbringen der Paste 2a in das formgebende Medium 7 des Werkzeuges 1 sowie das verschmelzende Auftragen und Aushärten der eingebrachten Paste auf das Flachglas 3 sind verschiedene Ausführungsformen möglich, von denen einige anhand der Figur 3 und folgenden beschrieben werden.

Die Figur 3 zeigt ein als Walze 8 ausgebildetes Werkzeug 1 mit dem Basiswerkzeug 6 und dem formgebenden Medium 7, hier ein strukturiertes Blech wie in Figur 2, das mittels einer Spannvorrichtung 9 an dem Basiswerkzeug 6 befestigt ist. Zur Positionierung des Bleches besitzt die Walze 8 analog der Darstellung in Figur 2 eine entsprechende Struktur 7c. Die Drehachse 10 der Walze 8 ist horizontal ortsfest gelagert. Das Glas 3 wird mit der Vorschubgeschwindigkeit V quasi unter der Walze 8 durchgeführt, die sich entsprechend der Pfeilrichtung dreht und beim Abrollen über die Oberfläche des Flachglases 3 auf dieser die gewünschten Strukturen aufbringt. Die Walze 8 ist dabei vorzugsweise in vertikaler Richtung druckgesteuert.

Bei der dem Tiefdruck angelehnten Ausführungsform wird somit das gesamte Basiswerkzeug 6 mit dem formgebenden Medium 7 mit dem Flachglas 3 kontaktiert. Durch entsprechende, dem Tiefdruck entnommene Spanntechniken 9 wird dabei ein planes Anliegen des formgebenden Mediums 7 am Basiswerkzeug 6 gewährleistet.

Um die Walzenachse 10 so zu haltern, daß sie nur in vertikaler Richtung, wie durch die Pfeile angedeutet, verschiebbar ist, stehen dem Fachmann verschiedene Konstruktionsmöglichkeiten zur Verfügung. Die Anordnung kann dabei auch so getroffen werden, daß die Walze 8, die mit der Kraft F gegen das Glas 3 gedrückt wird, sich allein durch den Vorschub der Glasplatte 3 mitdreht. Es kann allerdings auch ein ergänzender Antrieb für die Walzenachse 10 vorgesehen sein.

Es sind eine Reihe von technischen Möglichkeiten denkbar, um die aufzutragende Paste 2a in die Durchbrüche des formgebenden Mediums 7 einzubringen, d.h. die Vertiefungen des strukturierten Preß- oder Walzwerkzeuges 8 mit der Paste 2a zu befüllen.

Die Figur 3 zeigt eine Vorrichtung, mit der über ein Rakelmesser 11 eine im Übergangsbereich zwischen Rakelmesser und Walze befindliche Anhäufung der Paste 2a, im folgenden Bugwelle genannt, in die Vertiefungen gepreßt wird, wobei durch das Rakelmesser 11 eine ebene Oberfläche auf der Walze erzeugt wird. Derartige Rakelmesser werden bei Druckmaschinen eingesetzt. Ziel ist, ausser in den Vertiefungen der Druckwalze auf ihrer Oberfläche, die mit dem Glas kontaktiert, keine Paste mehr zu haben, d.h. eine glatte, bündige Oberfläche zu schaffen.

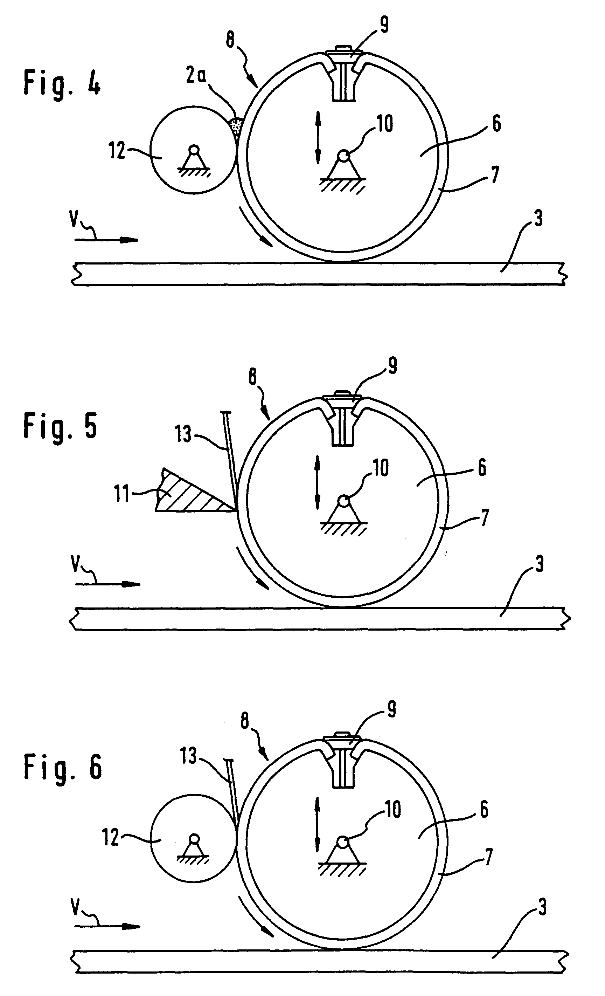

Die Figur 4 zeigt eine Ausführung ähnlich derjenigen nach Figur 3, bei der jedoch anstelle des Rakelmessers 11 eine ebene Gegenwalze 12 die Bugwelle der Paste 2a in die Vertiefungen des formgebenden Mediums 7 unter Erzeugung einer glatten bündigen Oberfläche preßt.

Die Figur 5 zeigt eine Ausführungsform entsprechend Figur 3, bei der jedoch anstelle einer bereits angehäuften Paste ein aufgeschmolzenes Micro-Sheet-Dünnglas 13 als Paste in die Vertiefungen des formgebenden Mediums gepreßt und durch das Rakelmesser 11 eine glatte Oberfläche auf der Walze erzeugt wird. Dies bedingt allerdings ein vorheriges Aufheizen des Micro-sheets auf eine Temperatur oberhalb Tg.

Die Figur 6 zeigt eine Ausführung entsprechend Figur 4, bei der jedoch ebenfalls, wie im Fall der Figur 5, anstelle einer Pastenanhäufüng ein aufgeschmolzenes Micro-Sheet-Dünnglas mittels der ebenen Walze 12 in die Strukturen des formgebenden Mediums 7 gepreßt wird.

Bei all diesen Ausführungsformen wird durch eine Temperierung des formgebenden Mediums 7 mittels des Lasers 5 oder vergleichbarer Energiequellen das in den Vertiefungen befindliche Glas in seinem zähflüssigen Zustand beibehalten, bis nach der weiteren Drehung der Walze 8 eine Kontaktierung mit der Oberfläche des Flachglases 3 stattfindet. Bei Kontaktierung der Strukturwalze mit dem Flachglas findet auch eine Kontaktierung der Paste 2a (Lotglas oder zähflüssiges Micro-Sheet) mit dem Glas 3 statt, so daß ein Verbinden von Paste 2a und Glas 3 stattfinden kann.

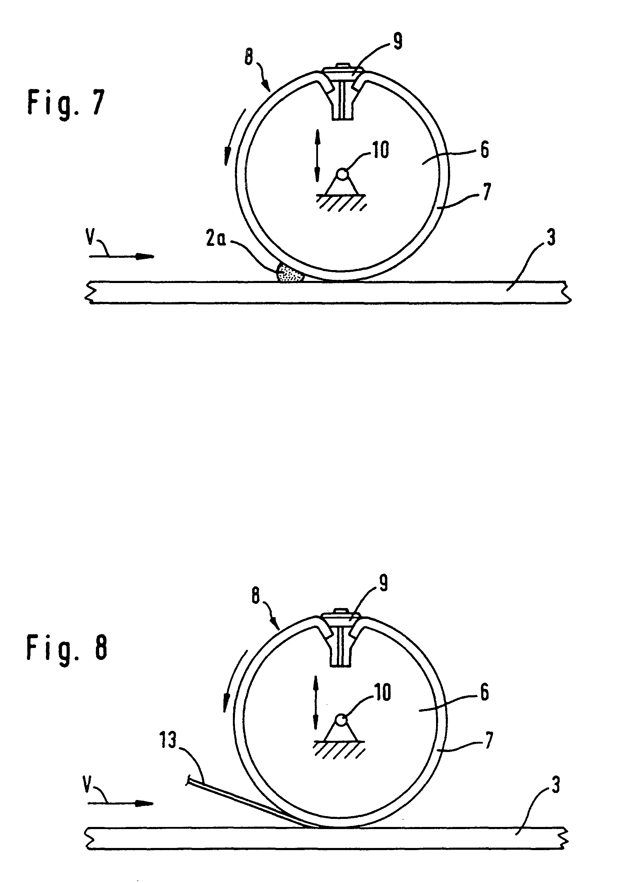

Eine weitere Möglichkeit, Vertiefungen des strukturierten Preß- oder Walzwerkzeuges 8 mit einer Paste 2a zu füllen, besteht, wie in Figur 7 dargestellt, darin, unmittelbar vor der Strukturwalze 8 auf dem Flachglas 3 die Paste zu positionieren, die als Bugwelle von der Strukturwalze vor sich hin geschoben wird. Durch die Kompressionskräfte in der Bugwelle werden die Strukturen der Walze 8 mit der Paste 2a gefüllt.

Die Figur 8 stellt eine Abwandlung der Ausführung nach Figur 7 dar, mit der die Vertiefungen der strukturierten Walze 8 durch ein aufgeschmolzenes Dünnglas als Paste gefüllt werden. Zu beachten und ggf. nachteilig sind hierbei allerdings die enormen Kompressionskräfte in der Bugwelle vor der Walze.

Die verschiedenen technischen Möglichkeiten zum Einbringen der aufzutragenden Paste in das strukturierte Werkzeug gemäß den Figuren 3 bis 8 wurden an einem Zweikomponenten-Werkzeug dargestellt. Es versteht sich, daß diese Methoden auch in gleicher Weise bei einem üblichen Einkomponenten-Werkzeug mit der strukturbildenden Oberfläche an seiner Peripherie durchgeführt werden können, ohne daß diese Ausführung gesondert zeichnerisch dargestellt werden müßte.

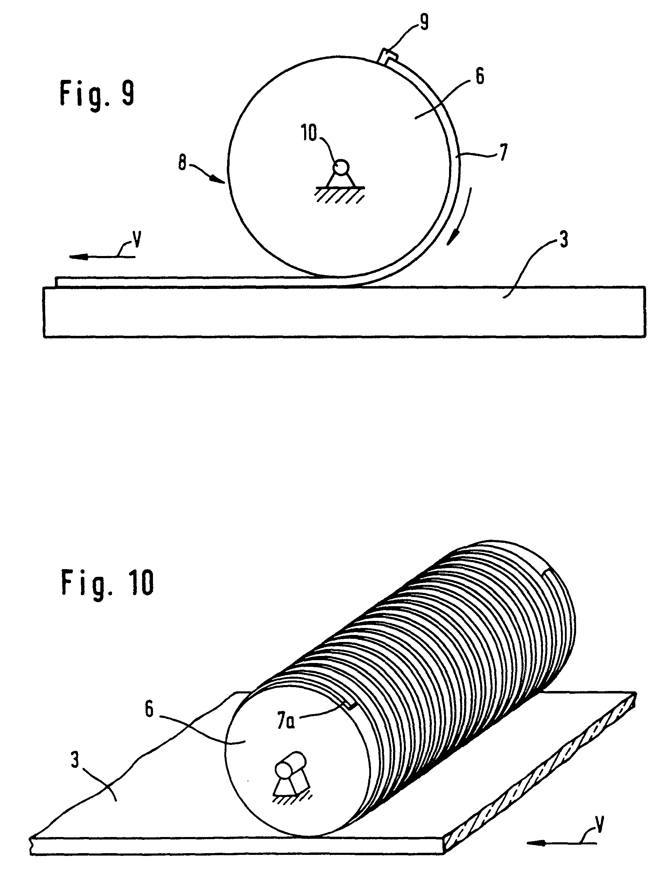

Der zweikomponentige Aufbau des Strukturwerkzeuges erlaubt jedoch zusätzliche Varianten der Verfahrensführung und des Werkzeugaufbaues, die anhand der folgenden Figuren 9 bis 13 beschrieben werden sollen.

Die Figur 9 zeigt einen zweikomponentigen Werkzeugaufbau entsprechend Figur 3, wobei die Vertiefungen in dem formgebenden Medium 7 insbesondere entsprechend den in den Figuren 3 bis 8 dargestellten Möglichkeiten mit der Paste befüllt werden. Im Gegensatz zu der Ausführungsform nach Figur 3 bis 8 wird während des Rollens der Strukturwalze 8 das formgebende Medium in Form des Bleches 7 vom Basiswerkzeug 6 abgewickelt. Nach der Kontaktierung des formgebenden Mediums 7 mit der Oberfläche des Flachglases 3 verbleibt dieses so auf dem Flachglas 3. Hierdurch ergibt sich während des Aushärtens der Paste (Sinterprozeß oder Abkühlung des aufgeschmolzenen Micro-Sheets) eine mechanische Stabilisierung der Paste, denn das formgebende Medium verhindert mit Sicherheit ein Zerfließen der Paste. Nach der Formgebung kann das abgekühlte Medium aufgrund der größeren thermischen Kontraktion gegenüber dem verfestigten Micro-Sheet-Glas bzw. der Kontraktion des Glaslotes leicht aus der Struktur entfernt werden. Eine leichte Konizität der erhabenen Strukturteile des formgebenden Mediums 7 unterstützt dieses Auslösen.

Eine weitere Ausführungsform ist in Figur 10 dargestellt, bei der das formgebende Medium nicht, wie in den Figuren 3 und 8, als zusammenhängendes strukturiertes Blech, sondern als Bandmaterial 7a auf das walzenförmige Basiswerkzeug 6 schraubenförmig aufgewickelt ist. Die Ausführungsform nach Figur 10 stellt sozusagen eine Abwandlung der Ausführungsform von Figur 3 dar. Hier wird anstelle eines zusammenhängenden Bleches 7, an einem Walzenende beginnend, das Bandmaterial 7a um die Basiswalze 6 entlang einem schraubenförmig vorstrukturierten Steg gewickelt, der auch der Abstandseinhaltung des Bandmateriales dient. In die Räume zwischen den einzelnen Bandlagen wird gemäß den dargestellten Methoden die auszutragende Paste gestrichen (gerakelt bzw. eingewalzt nach den Figuren 3-8), gegebenenfalls nach Vorerwärmung des Micro-Sheet-Glases. Gegenüber der Ausführungsform nach Figur 3 besteht die Einschränkung darin, daß zwischen den auf der Basiswalze 6 befindlichen Bandwicklungen ein durchgehender Spalt bestehen muß. Dadurch ist jedoch die Ausführungsform nach Figur 10 prädestiniert für die Einbringung von Linienstrukturen in das Flachglas, wie sie beispielsweise bei den eingangs erwähnten Flachbildschirmgläsern aufgebracht werden müssen.

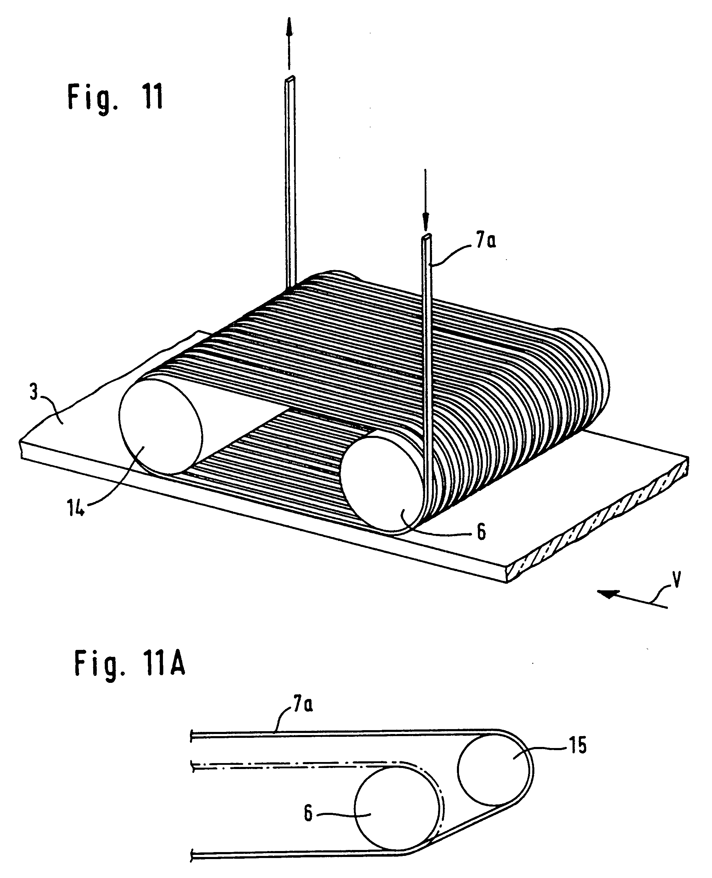

Eine weitere Ausführungsform, bei der das formgebende Medium nicht als zusammenhängendes Blech, sondern als Bandmaterial entsprechend Figur 10 ausgestaltet ist, ist in Figur 11 dargestellt. Während bei der Ausführungsform in Figur 10 das Bandmaterial fest auf der Walze 6 angebracht ist und diese Walze 6 mit dem Bandmaterial 7a vollständig über die Oberfläche des Glases 3 abrollt, zeigt die Figur 11 eine Ausführungsform, bei der ähnlich wie in Figur 9 das formgebende Medium, das Bandmaterial 7a, für eine vorgegebene Zeit in den aufgetragenen Strukturen belassen wird. Die Ausführungsform nach Figur 11 sieht zu diesem Zweck zwei achsparallele Walzen vor, eine formgebende Basiswalze 6 und eine Hilfswalze 14. Die formgebende Basiswalze 6, an deren einem Ende sich die Bandmaterialzuführ gemäß dem Pfeil befindet, ist mit senkrecht zur Walzenachse geschlossenen Ringen zur Führung des Bandmateriales 7a versehen, die auch zur Abstandseinstellung des Bandmateriales dienen. Die Basiswalze 6 dient dazu, zur Strukturgebung das Bandmaterial 7a auf dem Flachglas 3 zu positionieren, um es dann zur Strukturerhaltung während der Aushärtephase der Paste in den aufgebrachten Strukturen zu belassen. Hieraus ergibt sich während des Aushärtens der Paste (Sinterprozeß oder Abkühlung des Micro-Sheets) eine mechanische Stabilisierung der Paste, wie bei der Ausführungsform nach Figur 9 (das formgebende Medium verhindert ein Zerfließen der Paste), die bei konventionellen Heißformgebungsprozessen nicht erzielt wird. Nach der Aushärtung der aufgetragenen Paste und Verschmelzung mit dem Flachglas 3 durch den Laser 5 wird das formgebende Bandmedium 7a mittels der zur Basiswalze achsparallelen Hilfswalze 14 aus der Struktur entfernt. Diese Hilfswalze ist vorzugsweise nicht strukturiert, um eventuelle Temperatur- und damit verbundene Längenunterschiede zur Basiswalze 6 kompensieren zu können. An dem einen Ende dieser Hilfswalze befindet sich auch die Abfuhr des Bandmaterials gemäß dem gezeigten Pfeil. Es ist auch möglich, mehrere Bandzu- und -abfuhren zu realisieren.

Die seitliche Führung des Bandes 7a auf der hinteren Hilfswalze 14 erfolgt praktisch durch den Vorschub des Glases 3, da die aufgetragene Paste nach der Strukturbildung sehr schnell erstarrt und das Band 7a dadurch praktisch bis zum Abheben an der Hilfswalze 14 lateral fixiert ist.

Die Breite des die Struktur formenden Bandes 7a beträgt bei Displayanwendungen etwa 150-750 *µ*m abzüglich der Stegbreite von 50 *µ*m-100 *µ*m, vorzugsweise 200-600 *µ*m. Es ist auch möglich, Bänder mit einer Breite von unterhalb 150 *µ*m zu verwenden, jedoch nimmt dann die Reißfestigkeit des Bandes immer mehr ab. Der Abstand der Bänder voneinander, vorgegeben durch die Führungsringe auf der Basiswalze 6, soll etwa 50-100 µm, betragen, vorzugsweise so gering wie möglich sein. Für das Bandmaterial der Ausführungsformen nach den Figuren 10 und 11 bestehen hinsichtlich des Werkstoffes, aus dem sie gebildet werden, die im Zusammenhang mit der Ausführungsform nach Figur 1 beschriebenen Randbedingungen hinsichtlich des Verklebens mit dem Glas und der Kostensituation. Da insoweit eine Platin-Gold-Legierung auf der einen Seite besondere Vorteile hinsichtlich des Nichtverklebens mit dem Glas besitzt, auf der anderen Seite jedoch sehr teuer ist, muß ein massiv aus diesem Werkstoff bestehendes Band rückgeschmolzen werden. Um diesen Aufwand zu vermeiden, wird alternativ als Grundmaterial ein Stahlband verwendet, das eine entsprechende Zugfestigkeit aufweist und mit einer Anti-Klebe-Schicht versehen ist.

Die Aufheizung des Bandmaterials 7a erfolgt vorzugsweise mittels Laserstrahlung, wobei, wie vorstehend erwähnt, auch eine induktive oder elektrische Widerstandsheizung eingesetzt werden kann.

Eine aus Quarzal bestehende Basiswalze 6 muß bei Displaybreiten von 360 mm für 25"-PALC-Bildschirme mit einer Toleranz von ca. ± 40°C temperiert werden, damit insoweit keine zusätzliche Ausdehnung stattfindet, die die gewünschte Genauigkeit von ± 10*µ*m verhindern würde. Zum Zecke der allgemeinen Erläuterung sei darauf hingewiesen, daß die Ausführungsform mit dem Bandmaterial nach Figur 11 im wesentlichen der Struktur der bekannten Wafersäge entspricht. Der Abstand zwischen den Walzen 6 und 14 ist von der Vorschubgeschwindigkeit abhängig, wobei das Bandmaterial 7a einige Sekunden bis Minuten in der aufgetragenen Pastenstruktur bleibt, bis diese Struktur ausgehärtet ist.

Weil durch das Aufwärmen des Bandmaterials 7a auf der Basiswalze 6 dieses durch thermische Dehnung locker wird, ist es gemäß der Ausführungsform in Figur 11A vorteilhaft, eine dritte, nicht strukturierte Walze 15 als achsparallele Walze vorzusehen, durch die das Bandmaterial gespannt wird. Das Bandmaterial ist hierdurch nur noch über einen kleinen Winkelbereich mit der Basiswalze kontaktiert. Zur Ausbildung der Anordnung nach Figur 11A stehen dem Fachmann entsprechende Konstruktionen zur Verfügung.

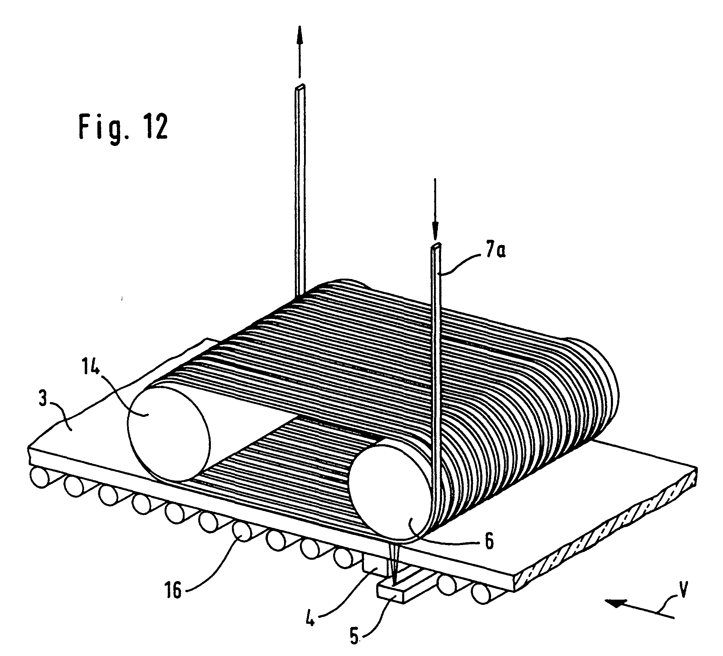

Sämtliche bislang beschriebenen Ausführungsformen sind mit einem Laser zur Aufheizung des formgebenden Mediums 7 bzw. 7a und der Paste 2a kombinierbar. Die Figur 12 stellt eine Ausführungsform von Figur 11 mit einer entsprechenden Laserstrahl-Aufheizung an der Kontaktierungsfläche des formgebenden Mediums mit dem Flachglas 3 dar. Als Laserquelle 5 dient hier ein Array mehrerer nebeneinander positionierter Diodenlaser. Diese Laserzeile erzeugt ein zu den Walzenachsen paralleles homogenes Strahlprofil auf der Breite der Basiswalze 6. Zur Aufbringung der Laserstrahlung auf das formgebende Medium 7a und zur Gegenkraftaufnahme der Druckkraft F gleitet das Flachglas 3, das mittels Transportrollen 16 geführt ist, zusätzlich einseitig über einen Gleitfuß 4, neben dem der Strahl des Lasers geführt wird. Ein entsprechender Laser mit einer Wellenlänge von 800 nm ist beispielsweise mit einer Leistung von 800 Watt bei 0.5 m Zeilenlänge kommerziell erhältlich. Setzt man einen typischen Anteil von etwa 30 % für die in Stählen in Wärme umgesetzte Gesamtleistung an, so ergeben sich eingebrachte Wärmeleistungen von 240 Watt. Bezogen auf typische Flachbildschirmgläser von 360 x 650 mm kann mittels eines Lasers von 800 Watt Leistung bei Verwendung des Werkstoffes Stahl in dem formgebenden Medium mit einer Dicke von 200 nm das formgebende Medium in einem Zeitraum von etwa einer Minute um 100 K aufgeheizt werden. Sieht man mehrere Laserdiodenzeilen vor, so kann die Laserleistung noch vervielfacht werden.

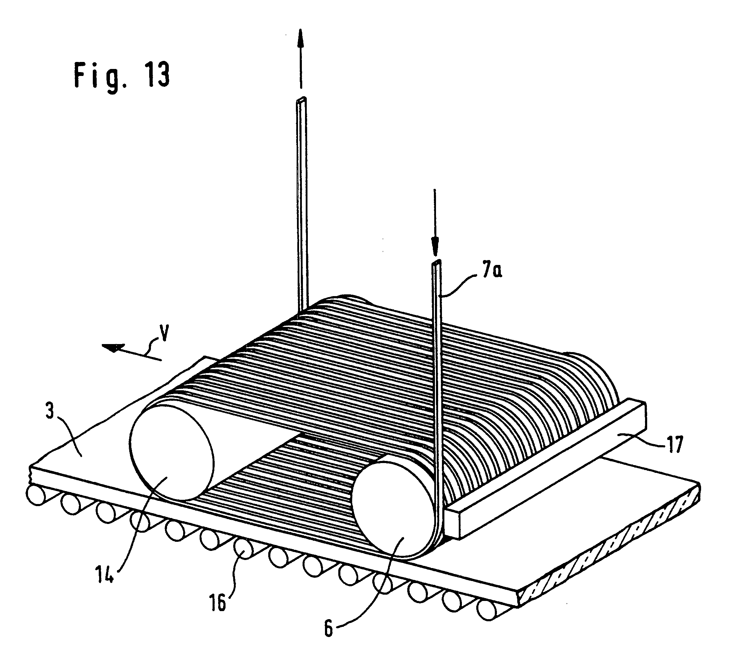

Neben der Laserstrahlaufheizung an der Kontaktierungsfläche des formgebenden Medium 7, 7a mit dem Glas 3 kann die Laserquelle 5 natürlich auch an anderen Orten (vor oder hinter der Kontaktierungsfläche mit dem Glas) zur Aufheizung des formgebenden Medium und der hierin aufgenommenen formgebenden Paste verwendet werden. Da bei einer Aufheizung vor der Kontaktierung (z.B. zum Aufschmelzen des Micro-Sheets) die Laserstrahlung nicht durch das Glas 3 treten muß, können hier auch Laserquellen verwendet werden, deren Strahlung eine hohe Absorption in Glas aufweist (wie z.B. CO₂-Strahlung). Die Figur 13 zeigt eine solche Anordnung ausgehend von der Ausführung nach Figur 12 mit einem seitlich zu der Basiswalze angeordneten Laserdioden-Array 17.

Dieses seitliche Laserdioden-Array kann auch bei den anderen Ausführungsformen nach den vorhergehenden Anordnungen vorgesehen werden, insbesondere ist eine Laser-Kombination entsprechend den Figuren 12 und 13 möglich.

## Patentansprüche

1. Verfahren zur Erzeugung von großflächigen Präzisionsstrukturen auf Flachglas, mit den Schritten:
- Einbringen eines die Strukturen ausbildenden pastenförmigen Materials in eine strukturgebende Oberfläche eines Werkzeuges,
- Auftragen des pastenförmigen Materials durch einmaliges Anpressen des Werkzeuges an das Flachglas und Aushärten des aufgetragenen Materials, und
- Verschmelzen des aufgetragenen Materials mit dem Flachglas durch eine lokale äußere Erwärmung der strukturgebenden Oberfläche des Werkzeuges bis zu einer von der Höhe der Struktur vorgegebenen Oberflächentiefe auf die notwendige Prozeßtemperatur.

2. Verfahren nach Anspruch 1, dadurch gekennzeichnet, daß zum lokalen Erwärmen der strukturgebenden Oberfläche eine Laserstrahlung durch das Flachglas auf die strukturgebende Oberfläche gerichtet wird.

3. Verfahren nach Anspruch 2, dadurch gekennzeichnet, daß die Erwärmung durch Laserstrahlung zusätzlich durch andere geeignete konventionelle Wärmequellen, beispielsweise Flammleisten, unterstützt wird.

4. Verfahren nach Anspruch 1, dadurch gekennzeichnet, daß das lokale Erwärmen der strukturgebenden Oberfläche des Formgebungswerkzeuges durch eine induktive Heizung erfolgt.

5. Verfahren nach Anspruch 1, dadurch gekennzeichnet, daß das lokale Erwärmen der strukturgebenden Oberfläche des Formgebungswerkzeuges durch eine elektrische Widerstandsheizung erfolgt.

6. Verfahren nach einem der Ansprüche 1 bis 5, dadurch gekennzeichnet, daß beim Erwärmen der strukturgebenden Oberfläche durch eine interne Kühlung des Formgebungswerkzeugs dessen innere Aufheizung minimiert wird.

7. Verfahren nach einem der Ansprüche 1 bis 6, dadurch gekennzeichnet, daß das Formgebungswerkzeug mit dem eingebrachten pastenförmigen Material kontinuierlich auf der zu strukturierenden Glasoberfläche abgerollt wird.

8. Verfahren nach einem der Ansprüche 1 bis 7, dadurch gekennzeichnet, daß es mit einem Formgebungswerkzeug durchgeführt wird, das aus einem walzenförmigen Basiswerkzeug und einem daran lösbar angebrachten formgebenden Medium mit der strukturgebenden Oberfläche für das einzubringende pastenförmige Material gebildet ist.

9. Verfahren nach Anspruch 7 und 8, dadurch gekennzeichnet, daß das formgebende Medium mit der eingebrachten Paste während des Abrollens des Formgebungswerkzeuges auf dem Flachglas vom Basiswerkzeug abgewickelt, auf das Flachglas gedrückt und dort während der Aushärtphase belassen wird.

10. Verfahren nach einem der Ansprüche 1 bis 9, dadurch gekennzeichnet, daß als pastenförmiges Material ein Glaslot oder aufgeschmolzenes Glas, vorzugsweise ein Micro-Sheet-Dünnglas, und/oder eine elektrisch leitfähige Paste für Elektrodenstrukturen verwendet wird.

11. Verfahren nach einem der Ansprüche 1 bis 10, dadurch gekennzeichnet, daß das Einbringen des pastenförmigen Materials in die strukturgebende Oberfläche durch Aufstreichen des pastenförmigen Materials in die Vertiefungen der strukturgebenden Oberfläche erfolgt.

12. Verfahren nach einem der Ansprüche 1 bis 10, dadurch gekennzeichnet, daß das Einbringen des pastenförmigen Materials in die strukturgebende Oberfläche durch Aufwalzen des pastenförmigen Materials in die Vertiefungen der strukturgebenden Oberfläche erfolgt.

13. Vorrichtung zur Durchführung des Verfahrens zur Erzeugung von großflächigen Präzisionsstrukturen auf Flachglas nach Anspruch 1 oder einem der folgenden, mit
- einer Einrichtung (11,12) zum Einbringen eines die Strukturen ausbildenden pastenförmigen Materials (2a,13) in eine strukturgebende Oberfläche (2) eines Formgebungswerkzeuges (1),
- Mitteln zum Auftragen des pastenförmigen Materials (2a,13) durch einmaliges Anpressen des Formgebungswerkzeuges (1) an das Flachglas (3) sowie Mitteln zum Aushärten des aufgetragenen Materials und
- Mitteln zum Verschmelzen des aufgetragenen Materials (2a, 13) auf dem Flachglas durch eine lokale Erwärmung der strukturgebenden Oberfläche (2) des Formgebungswerkzeuges (1) mit der eingebrachten Paste auf die notwendige Prozeßtemperatur durch eine äußere Wärme erzeugende Quelle (5).

14. Vorrichtung nach Anspruch 13, dadurch gekennzeichnet, daß die Wärme erzeugende Quelle durch eine Strahlungsquelle (5) gebildet ist.

15. Vorrichtung nach Anspruch 14, dadurch gekennzeichnet, daß die Strahlungsquelle ein Laser (5) ist.

16. Vorrichtung nach Anspruch 13, dadurch gekennzeichnet, daß der Laser (5) durch ein Array von Laserdioden gebildet ist.

17. Vorrichtung nach Anspruch 15 oder 16, dadurch gekennzeichnet, daß die Laser-Strahlungsquelle (5) auf der dem Formgebungswerkzeug (1) abgewandten Seite des Flachglases (3) angeordnet ist und eine für Glas transmissive Wellenlänge besitzt.

18. Vorrichtung nach Anspruch 13, dadurch gekennzeichnet, daß die Wärme erzeugende Quelle eine induktive Heizung ist.

19. Vorrichtung nach Anspruch 13, dadurch gekennzeichnet, daß die Wärme erzeugende Quelle eine elektrische Widerstandsheizung ist.

20. Vorrichtung nach einem der Ansprüche 13 bis 19, dadurch gekennzeichnet, daß das Formgebungswerkzeug (1) aus einem Basiswerkzeug (6) und einem darauf angeordneten separaten formgebenden Medium (7, 7a) mit der sturkturgebenden Oberfläche (2) besteht.

21. Vorrichtung nach Anspruch 20, dadurch gekennzeichnet, daß das Basiswerkzeug (6) aus einem Material mit geringer Wärmeleitfähigkeit und das formgebende Medium (7, 7a) aus einem Material mit hoher Wärmeleitfähigkeit besteht.

22. Vorrichtung nach Anspruch 21, dadurch gekennzeichnet, daß das Basiswerkzeug (6) aus Keramik besteht, die vorzugsweise eine geringe thermische Dehnung besitzt.

23. Vorrichtung nach einem der Ansprüche 20-22, dadurch gekennzeichnet daß das formgebende Medium (7) durch ein strukturiertes Blechteil gebildet ist.

24. Vorrichtung nach Anspruch 23, dadurch gekennzeichnet, daß das strukturierte Blechteil (7) lösbar am Basiswerkzeug (6) befestigt ist.

25. Vorrichtung nach Anspruch 24, dadurch gekennzeichnet, daß das strukturierte Blechteil am Basiswerkzeug (6) von ihm auf das Flachglas (3) abwickelbar befestigt ist.

26. Vorrichtung nach einem der Ansprüche 20 bis 25, dadurch gekennzeichnet, daß das Basiswerkzeug (6) eine Walze ist.

27. Vorrichtung nach einem der Ansprüche 20 bis 26, dadurch gekennzeichnet, daß das Basiswerkzeug (6) eine Struktur (7c) zur Fixierung des formgebenden Mediums (7) auf dem Basiswerkzeug (6) aufweist.

28. Vorrichtung nach Anspruch 26, dadurch gekennzeichnet, daß das formgebende Medium aus einem um das als Walze ausgebildete Basiswerkzeug (6) gewickeltem Bandmaterial (7a) besteht.

29. Vorrichtung nach Anspruch 28, dadurch gekennzeichnet, daß die Walze eine Führungsstruktur für das Bandmaterial (7a) aufweist.

30. Vorrichtung nach Anspruch 28 oder 29, dadurch gekennzeichnet, daß im Formgebungswerkzeug (1) achsenparallel beabstandet zu der als Basiswerkzeug (6) dienenden Walze eine zweite Hilfswalze (14) vorgesehen ist, und das Bandmaterial (7a) über beide Walzen (6, 14). durch die Führungsstruktur beabstandet, abwickelbar ist, unter kontinuierlichem Zuführen und Abführen des Bandmaterials.

31. Vorrichtung nach Anspruch 30, dadurch gekennzeichnet, daß der als Basiswerkzeug (6) dienenden Walze mindestens eine Zuführeinrichtung für das Bandmaterial und der Hilfswalze (14) mindestens eine Abführeinrichtung für das Bandmaterial (7a) zugeordnet ist.

32. Vorrichtung nach Anspruch 30 oder 31, dadurch gekennzeichnet, daß zum Spannen des über die Basiswalze (6) und die Hilfswalze (14) umlaufenden Bandmaterials (7a) eine zusätzliche Spannwalze (12) vorgesehen ist.

33. Vorrichtung nach einem der Ansprüche 13 bis 32, gekennzeichnet durch ein Rakelmesser (11) zum Aufstreichen des pastenförmigen Materials (2a,13) in die Vertiefungen der strukturgebenden Oberfläche (2) des Formgebungswerkzeuges (1).

34. Vorrichtung nach einem der Ansprüche 13 bis 32, gekennzeichnet durch eine ebene Walze (12) zum Aufwalzen des pastenförmigen Materials (2a,13) in die Vertiefungen der strukturgebenden Oberfläche (2) des Formgebungswerkzeuges.

35. Vorrichtung nach einem der Ansprüche 30 bis 34, dadurch gekennzeichnet, daß oberhalb des Flachglases (3) und seitlich an der Basiswerkzeugwalze (6) ein Laserdiodenarray (17) oder Laserstrahlungszeile angeordnet ist, die der Walzenoberfläche thermische Energie zuführt.

36. Vorrichtung nach einem der Ansprüche 13-35, dadurch gekennzeichnet, daß die erhabenen Strukturteile der strukturgebundenen Oberfläche (2) des Formgebungswerkzeuges (1) eine vorgegebene Konizität zum bessern Auslösen aus der gehärteten aufgetragenen Struktur aufweisen.

## Claims

1. Method of making large-scale precision structures on flat glass, comprising the steps of:
- supplying a paste-like material used for forming the structures to a structuring surface of a tool,
- applying the paste-like material by single pressing of the tool on the flat glass and hardening the applied material, and
- melting the applied material with the flat glass by local external heating of the structuring surface of the tool, as far as a surface depth predetermined by the height of the structure, to the required process temperature.

2. Method according to Claim 1, characterized in that laser radiation is directed through the flat glass onto the structuring surface to provide the local heating of the structuring surface.

3. Method according to Claim 2, characterized in that the heating by laser radiation is additionally supported by other suitable conventional heat sources, for example flame strips.

4. Method according to Claim 1, characterized in that the local heating of the structuring surface of the forming tool occurs by inductive heating.

5. Method according to Claim 1, characterized in that the local heating of the structuring surface of the forming tool occurs by electrical resistance heating.

6. Method according to one of Claims 1 to 5, characterized in that the interior heating of the forming tool during the heating of the structuring surface is minimized by internal cooling of the forming tool.

7. Method according to one of Claims 1 to 6, characterized in that the forming tool with the supplied paste-like material is rolled continuously on the glass surface to be structured.

8. Method according to one of Claims 1 to 7, characterized in that it is performed with a forming tool which is formed by a roller-like base tool and, releasably attached thereto, a forming medium having the structuring surface for the paste-like material to be supplied.

9. Method according to Claims 7 and 8, characterized in that the forming medium with the supplied paste is unrolled from the base tool and pressed onto the flat glass during the rolling of the forming tool over the flat glass, and is left there during the hardening phase.

10. Method according to one of Claims 1 to 9, characterized in that the paste-like material used is a glass solder or melted glass, preferably a micro-sheet thin glass and/or an electrically conductive paste for electrode structures.

11. Method according to one of Claims 1 to 10, characterized in that the supply of the paste-like material to the structuring surface occurs by spreading the paste-like material into the cavities of the structuring surface.

12. Method according to one of Claims 1 to 10, characterized in that the supply of the paste-like material to the structuring surface occurs by rolling the paste-like material into the cavities of the structuring surface.

13. Apparatus for performing the method of making large-scale precision structures on flat glass according to Claim 1 or one of the subsequent claims, comprising
- a device (11, 12) for supplying paste-like material (2a, 13) used for forming the structures to a structuring surface (2) of a forming tool (1),
- means for applying the paste-like material (2a, 13) by single pressing of the forming tool (1) on the flat glass (3) and means for hardening the applied material, and
- means for melting the applied material (2a, 13) on the flat glass by local heating of the structuring surface (2) of the forming tool (1) with the supplied paste to the required process temperature by an external heat-generating source (5).

14. Apparatus according to Claim 13, characterized in that the heat-generating source is formed by a radiation source (5).

15. Apparatus according to Claim 14, characterized in that the radiation source is a laser (5).

16. Apparatus according to Claim 13, characterised in that the laser (5) is formed by an array of laser diodes.

17. Apparatus according to Claim 15 or 16, characterized in that the laser-radiation source (5) is arranged on the opposite side of the flat glass (3) to the forming tool (1) and possesses a wavelength which is transmissive for glass.

18. Apparatus according to Claim 13, characterized in that the heat-generating source is an inductive heating device.

19. Apparatus according to Claim 13, characterized in that the heat-generating source is an electrical resistance heating device.

20. Apparatus according to one of Claims 13 to 19, characterized in that the forming tool (1) consists of a base tool (6) and, arranged thereon, a separate forming medium (7, 7a) having the structuring surface (2) .

21. Apparatus according to Claim 20, characterized in that the base tool (6) consists of a material having low thermal conductivity and the forming medium (7, 7a) consists of a material having high thermal conductivity.

22. Apparatus according to Claim 21, characterized in that the base tool (6) consists of ceramic, which preferably possesses a low thermal expansion.

23. Apparatus according to one of Claims 20 - 22, characterized in that the forming medium (7) is formed by a structured sheet metal piece.

24. Apparatus according to Claim 23, characterized in that the structured sheet metal piece (7) is releasably attached to the base tool (6).

25. Apparatus according to Claim 24, characterized in that the structured sheet metal piece is releasably attached to the base tool (6) in such a way that it can be unrolled therefrom onto the flat glass (3).

26. Apparatus according to one of Claims 20 to 25, characterized in that the base tool (6) is a roller.

27. Apparatus according to one of Claims 20 to 26, characterized in that the base tool (6) has a structure (7c) for securing the forming medium (7) on the base tool (6).

28. Apparatus according to Claim 26, characterized in that the forming medium consists of a band material (7a) wound around the base tool (6) which is formed as a roller.

29. Apparatus according to Claim 28, characterized in that the roller has a guiding structure for the band material (7a) .

30. Apparatus according to Claim 28 or 29, characterized in that the forming tool (1) is provided with a second auxiliary roller (14) spaced axially parallel from the roller acting as the base tool (6), and the band material (7a) can be unrolled over the two rollers (6, 14), spaced by the guiding structure, with continuous feeding and delivery of the band material.

31. Apparatus according to Claim 30, characterized in that the roller acting as the base tool (6) is allocated at least one feed device for the band material, and the auxiliary roller (14) is allocated at least one delivery device for the band material (7a).

32. Apparatus according to Claim 30 or 31, characterized in that an additional tensioning roller (12) is provided for tensioning the band material (7a) passing over the base roller (6) and the auxiliary roller (14).

33. Apparatus according to one of Claims 13 to 32, characterized by a doctor blade (11) for spreading the paste-like material (2a, 13) in the cavities of the structuring surface (2) of the forming tool (1).

34. Apparatus according to one of Claims 13 to 32, characterized by a plane-surface roller (12) for rolling the paste-like material (2a, 13) in the cavities of the structuring surface (2) of the forming tool.

35. Apparatus according to one of Claims 30 to 34, characterized in that a laser diode array (17) or a linear laser-radiation device, which feeds thermal energy to the roller surface, is arranged above the flat glass (3) and to the side of the base-tool roller (6).

36. Apparatus according to one of Claims 13 - 35, characterized in that the raised structure parts of the structuring surface (2) of the forming tool (1) have a predetermined conicity for better release from the hardened applied structure.

## Revendications

1. Procédé pour la fabrication de structures de précision à grandes surfaces sur du verre plat, comprenant les étapes :
- introduction d'un matériau sous forme de pâte, formant les structures dans une surface structurante d'un outil,
- application du matériau pâteux par pressage unique de l'outil contre le verre plat et durcissement du matériau appliqué, et
- fusion du matériau appliqué avec le verre plat par un chauffage externe local de la surface structurante de l'outil jusqu'à une profondeur de surface prédéterminée par la hauteur de la structure, à la température de procédé nécessaire.

2. Procédé selon la revendication 1, caractérisé en ce que, pour chauffer localement la surface structurante, un rayon laser est dirigé à travers le verre plat sur la surface structurante.

3. Procédé selon la revendication 2, caractérisé en ce que le chauffage par rayon laser est en outre appuyé par d'autres sources de chaleur conventionnelles appropriées, par exemple une bande de flammes.

4. Procédé selon la revendication 1, caractérisé en ce que le chauffage local de la surface structurante de l'outil de formage se fait par un chauffage inductif.

5. Procédé selon la revendication 1, caractérisé en ce que le chauffage local de la surface structurante de l'outil de formage se fait par un chauffage électrique par résistance.

6. Procédé selon l'une quelconque des revendications 1 à 5, caractérisé en ce que, lors du chauffage de la surface structurante, on minimise par un refroidissement interne de l'outil de formage le chauffage interne de celui-ci.

7. Procédé selon l'une quelconque des revendications 1 à 6, caractérisé en ce que l'outil de formage est déroulé en continu avec le matériau sous forme de pâte sur la surface de verre à structurer.

8. Procédé selon l'une quelconque des revendications 1 à 7, caractérisé en ce qu'il est réalisé à l'aide d'un outil de formage qui est constitué d'un outil de base en forme de rouleau et d'un milieu de formage disposé là-dessus de manière amovible, avec la surface structurante pour le matériau sous forme de pâte à introduire.

9. Procédé selon les revendications 7 et 8, caractérisé en ce que le milieu de formage avec la pâte introduite est déroulé, pendant le déroulement de l'outil de formage, sur le verre plat à part l'outil de base, pressé sur le verre plat et laissé là pendant la phase de durcissement.

10. Procédé selon l'une quelconque des revendications 1 à 9, caractérisé en ce que, comme matériau sous forme de pâte, du verre de soudure ou du verre fondu, de préférence un verre mince en micro-plaques, et/ou une pâte conductrice d'électricité pour des structures d'électrodes est utilisée.

11. Procédé selon l'une quelconque des revendications 1 à 10, caractérisé en ce que l'introduction du matériau sous forme de pâte dans la surface structurante se fait par enduction des creux des surfaces structurantes du matériau sous forme de pâte.

12. Procédé selon l'une quelconque des revendications 1 à 10, caractérisé en ce que l'introduction du matériau sous forme de pâte dans la surface structurante se fait par laminage du matériau sous forme de pâte dans les creux des surfaces structurantes.

13. Dispositif pour la réalisation du procédé de fabrication de structures de précision de grande surface sur du verre plat selon la revendication 1 ou l'une quelconque des suivantes, avec :
- un équipement (11, 12) pour l'introduction d'un matériau sous forme de pâte (2a, 13) formant les structures, dans une surface (2) structurante d'un outil de formage (1),
- des moyens pour l'application du matériau sous forme de pâte (2a, 13) par un pressage unique de l'outil de formage (1) contre le verre plat (3) ainsi que des moyens de durcissement du matériau appliqué et
- des moyens pour la fusion du matériau appliqué (2a, 13) sur le verre plat par un chauffage local de la surface structurante (2) de l'outil de formage (1) avec la pâte introduite portée à la température nécessaire au processus par une source (5) produisant une chaleur externe.

14. Dispositif selon la revendication 13, caractérisé en ce que la source de chaleur produisant la chaleur est formée par une source de rayonnement (5).

15. Dispositif selon la revendication 14, caractérisé en ce que la source de rayonnement est un laser (5).

16. Dispositif selon la revendication 13, caractérisé en ce que le laser (5) est formé par une rangée de diodes laser.

17. Dispositif selon la revendication 15 ou 16, caractérisé en ce que la source de rayonnement laser (5) est disposée sur le côté du verre plat (3) opposé à l'outil de formage (1) et a une longueur d'onde transmissible pour le verre.

18. Dispositif selon la revendication 13, caractérisé en ce que la source produisant la chaleur est un chauffage inductif.

19. Dispositif selon la revendication 13, caractérisé en ce que la source produisant la chaleur est un chauffage électrique par résistance.

20. Dispositif selon l'une quelconque des revendications 13 à 19, caractérisé en ce que l'outil de formage (1) est constitué d'un outil de base (6) et d'un milieu de formage séparé disposé là-dessus (7, 7a), avec la surface structurante (2).

21. Dispositif selon la revendication 20, caractérisé en ce que l'outil de base (6) est constitué d'un matériau à faible conductivité thermique et le milieu de formage (7, 7a) est constitué d'un matériau à forte conductivité thermique.

22. Dispositif selon la revendication 21, caractérisé en ce que l'outil de base (6) est constitué de céramique qui présente de manière avantageuse une faible dilatation thermique.

23. Dispositif selon l'une quelconque des revendications 20-22, caractérisé en ce que le milieu de formage (7) est formé d'une pièce structurée de tôle.

24. Dispositif selon la revendication 23, caractérisé en ce que la pièce structurée de tôle (7) est fixée de manière amovible sur l'outil de base (6).

25. Dispositif selon la revendication 24, caractérisé en ce que la pièce structurée de tôle est fixée sur l'outil de base (6) de manière à pouvoir être déroulée par lui sur le verre plat (3).

26. Dispositif selon l'une quelconque des revendications 20 à 25, caractérisé en ce que l'outil de base (6) est un rouleau.

27. Dispositif selon l'une quelconque des revendications 20 à 26, caractérisé en ce que l'outil de base (6) présente une structure (7c) pour la fixation du milieu de formage (7) sur l'outil de base (6) .

28. Dispositif selon la revendication 26, caractérisé en ce que le milieu de formage est constitué d'un matériau sous forme de bande (7a) enroulé autour de l'outil de base (6) qui se présente sous la forme d'un rouleau.

29. Dispositif selon la revendication 28, caractérisé en ce que le rouleau présente une structure de guidage pour le matériau sous forme de bande (7a).

30. Dispositif selon la revendication 28 ou 29, caractérisé en ce que, dans l'outil de formage (1), un deuxième rouleau auxiliaire (14) est prévu, espacé du rouleau servant d'outil de base (6), leurs axes étant parallèles, et que le matériau sous forme de bande (7a) est espacé par la structure de guidage via les deux rouleaux (6, 14) et peut être déroulé avec amenée et évacuation continues du matériau sous forme de bande.

31. Dispositif selon la revendication 30, caractérisé en ce qu'au moins un équipement d'amenée pour le matériau sous forme de bande est affecté au rouleau servant d'outil de base (6) et qu'au moins un équipement d'évacuation pour le matériau sous forme de bande (7a) est affecté au rouleau auxiliaire (14).

32. Dispositif selon la revendication 30 ou 31, caractérisé en ce que, pour tendre le matériau sous forme de bande (7a) circulant via le rouleau de base (6) et le rouleau auxiliaire (14), est prévu un rouleau tendeur supplémentaire (12).

33. Dispositif selon l'une quelconque des revendications 13 à 32, caractérisé par un couteau à racle (11) pour l'enduction des creux de la surface structurante (2) de l'outil de formage (1) du matériau sous forme de pâte (2a, 13).

34. Dispositif selon l'une quelconque des revendications 13 à 32, caractérisé par un rouleau horizontal (12) pour laminer le matériau sous forme de pâte (2a, 13) dans les creux de la surface structurante (2) de l'outil de formage.

35. Dispositif selon l'une quelconque des revendications 30 à 34, caractérisé en ce qu'au-dessus du verre plat (3) et latéralement contre le rouleau de l'outil de base (6) est disposée une rangée de diodes laser (17) ou une rangée de rayonnement laser qui amène l'énergie thermique à la surface du rouleau.

36. Dispositif selon l'une quelconque des revendications 13 à 35, caractérisé en ce que les parties de structure saillantes de la surface liée à la structure (2) de l'outil de formage (1) présentent une conicité prédéterminée pour un meilleur détachement de la structure appliquée durcie.
